# EUROPEAN PATENT APPLICATION

(11) **EP 3 327 654 A1**
(43) Date of publication of application: **30.05.2018**
(21) Application number: 17202477.0
(22) Date of filing: 20.11.2017
(51) Int. Cl.: G06Q 30/06, G06Q 30/02

(54) **METHODS AND SYSTEMS FOR RECOMMENDING SKIN CARE PRODUCTS**

(30) Priority: 25.11.2016 US 201615361095
(71) Applicant: Revieve Oy, 01520 Vantaa (FI)
(72) Inventor: Parkkinen, Sampo, 01520 Vantaa (FI); Weigh, Gavin, 00170 Helsinki (FI)
(74) Representative: Suominen, Kaisa Liisa

(57) **Abstract**

Disclosed is a method of recommending at least one skin care product to a user. The method comprises receiving at least one image of a skin of the user and analysing the at least one image to determine at least one skin characteristic of the user. Furthermore, the method comprises receiving at least one of indoor environmental data corresponding to an accommodation associated with the user, and/or outdoor environmental data corresponding to a location of the user. Moreover, the method comprises identifying the at least one skin care product based on the determined at least one skin characteristic of the user, and at least one of the received indoor environmental data and/or the received outdoor environmental data. Furthermore, the method comprises providing a recommendation comprising the identified at least one skin care product to the user.

## Description

### TECHNICAL FIELD

The present disclosure relates generally to a method and a system for making product recommendations; and more specifically, to a method and a system for recommending appropriate skin care products to users.

### BACKGROUND

In humans, skin is the largest organ of the integumentary system. Since the human skin is the outer covering of the body, it is subject to constant attack from various external and internal factors. Therefore, it is important to monitor skin health, and regularly and periodically use skin care products or cosmetics to take care of the skin.

However, there are tens of thousands of different skin care products and other cosmetics available in the market. Selecting an appropriate skin care product can be difficult and overwhelming for users, as the selection depends on various factors including personal profile information, such as sex, age, skin condition and other characteristics.

Therefore, the users may consult with experts in the area. Often, skin care product advice is a service commonly rendered at skin clinics, gyms, shops, beauty salons and the internet, among other places. However, it may be inconvenient and costly to consult experts every time a decision regarding a skin care product is required to be made.

Therefore, in light of the foregoing discussion, there exists a need to overcome the aforementioned drawbacks associated with recommending skin care products to users.

### SUMMARY

The present disclosure seeks to provide a method of recommending at least one skin care product to a user. Furthermore, the present disclosure seeks to provide a system of recommending at least one skin care product to a user. The present disclosure seeks to provide a solution to the existing problems associated with conventional techniques of selecting skin care products by users. An aim of the present disclosure is to provide a solution that overcomes at least partially the problems encountered in the prior art, and provides a cheap and efficient solution and a robust system for recommending appropriate skin care products to users.

In one aspect, an embodiment of the present disclosure provides a method of recommending at least one skin care product to a user, the method comprising:
(i) receiving at least one image of a skin of the user;
(ii) analysing the at least one image to determine at least one skin characteristic of the user;
(iii) receiving at least one of:
   - indoor environmental data corresponding to an accommodation associated with the user;
   - outdoor environmental data corresponding to a location of the user;
(iv) identifying the at least one skin care product based on the determined at least one skin characteristic of the user, and at least one of the received indoor environmental data and/or the received outdoor environmental data; and
(v) providing a recommendation comprising the identified at least one skin care product to the user.

In another aspect, an embodiment of the present disclosure provides a system for recommending at least one skin care product to a user, the system comprising:
- a computing device for capturing at least one image of a skin of the user;
- an automation device installed at an accommodation associated with the user, the automation device being configured to generate indoor environmental data corresponding to the accommodation;
- a weather server configured to provide outdoor environmental data corresponding to a location of the user;
   and
- a processor configured to:
   - receive the at least one image of the skin of the user from the user computing device;
   - analyse the at least one image to determine at least one skin characteristic of the user;
   - receive at least one of:
      - indoor environmental data corresponding to the accommodation associated with the user from the automation device;
      - outdoor environmental data corresponding to the location of the user from the weather server;
   - identify the at least one skin care product based on the at least one skin characteristic, and at least one of the received indoor environmental data and/or the received outdoor environmental data; and
   - transmit a recommendation comprising the identified at least one skin care product to the computing device.

Embodiments of the present disclosure substantially eliminate or at least partially address the aforementioned problems in the prior art, and provide a reliable and cost-efficient method and system for recommending skin care products to users.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1 is a schematic diagram of a system for recommending at least one skin care product to a user, in accordance with an embodiment of the present disclosure;
FIGs. 2-4 are illustrations of the system of FIG. 1, in accordance with various embodiments of the present disclosure;
FIG. 5A is a table representing skin characteristics of users (such as user of FIG. 1) determined by analysis of an image of skin thereof,, in accordance with an embodiment of the present disclosure;
FIG. 5B is a table representing indoor environmental data associated with various indoor environments (such as accommodation of FIG. 1), in accordance with an embodiment of the present disclosure;
FIG. 5C is a table representing outdoor environmental data associated with various outdoor environments (such as outside of accommodation of FIG. 1), in accordance with an embodiment of the present disclosure;
FIG. 6 is a table representing product information, brand information and relevant attributes of multiple skin care products received from a product server (such as product server of FIG. 1), in accordance with an embodiment of the present disclosure;
FIG. 7A is a table corresponding to the tables of FIGs. 5A, 5B and 6, representing skin care products identified for first user and second user, in accordance with an embodiment of the present disclosure;
FIG. 7B is a table corresponding to the tables of FIGs. 5A, 5C and 6, representing skin care products identified for the first user and the second user, in accordance with an embodiment of the present disclosure;
FIG. 7C is a table corresponding to the tables of FIGs. 5A, 5B, 5C and 6, representing skin care products identified for the first user and the second user, in accordance with an embodiment of the present disclosure; and
FIG. 8 is an illustration of steps of a method of recommending at least one skin care product to a user, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, an embodiment of the present disclosure provides a method of recommending at least one skin care product to a user, the method comprising:
(i) receiving at least one image of a skin of the user;
(ii) analysing the at least one image to determine at least one skin characteristic of the user;
(iii) receiving at least one of:
   - indoor environmental data corresponding to an accommodation associated with the user;
   - outdoor environmental data corresponding to a location of the user;
(iv) identifying the at least one skin care product based on the determined at least one skin characteristic of the user, and at least one of the received indoor environmental data and/or the received outdoor environmental data; and
(v) providing a recommendation comprising the identified at least one skin care product to the user.

In another aspect, an embodiment of the present disclosure provides a system for recommending at least one skin care product to a user, the system comprising:
- a computing device for capturing at least one image of a skin of the user;
- an automation device installed at an accommodation associated with the user, the automation device being configured to generate indoor environmental data corresponding to the accommodation;
- a weather server configured to provide outdoor environmental data corresponding to a location of the user;
   and
- a processor configured to:
   - receive the at least one image of the skin of the user from the user computing device;
   - analyse the at least one image to determine at least one skin characteristic of the user;
   - receive at least one of:
      - indoor environmental data corresponding to the accommodation associated with the user from the automation device;
      - outdoor environmental data corresponding to the location of the user from the weather server;
      - identify the at least one skin care product based on the at least one skin characteristic, and at least one of the received indoor environmental data and/or the received outdoor environmental data; and
      - transmit a recommendation comprising the identified at least one skin care product to the computing device.

The method and the system enable recommending of at least one skin care product to a user, based on the at least one skin characteristic of the user and at least one of the indoor environmental data and/or the outdoor environmental data. Such recommending of the at least one skin care product to the user based on the at least one skin characteristic thereof, enables to improve skin characteristics of each user (such as, to provide relief from skin conditions) by recommending appropriate skin care products. Furthermore, usage of such skin care products that are specifically recommended to each user enables the user to save time and money that may have been otherwise spent in purchasing and using other skin care products that could not have provided an intended solution. Moreover, the at least one skin characteristic of the user is determined using the at least one image provided by the user. Such a determination of the at least one skin characteristic by using the at least one image enables inexpensive, time efficient and convenient determination of skin characteristics (such as skin conditions) of the user, without requiring multiple visits to a doctor or a skin care professional. Furthermore, the at least one skin care product is recommended to the user based on at least one of indoor environmental data and/or outdoor environmental data. Using such indoor and/or outdoor environmental data for recommending the at least one skin care product enables the user to easily adapt to environmental conditions that may adversely affect their skin, thereby, enabling the user to better care for their skin and further, easily overcome short and long-term problems posed by such adverse environmental conditions.

The method comprises receiving at least one image of a skin of the user. The user can use the computing device for capturing the image of the skin. The computing device may be one or more of a workstation, a personal computer, a laptop, a desktop computer, a tablet computer, a smartphone, a wearable computing device or another suitable computing device. Furthermore, the computing device comprises a camera. In such an instance, the user uses the camera of the computing device to capture the image of the skin. Alternatively, the computing device may obtain the images from another source (such as, from a social media account or a website associated with the user). The image of the skin of the user is received by a processor. For example, the computing device is communicably coupled with the processor through a wireless communication channel. The wireless communication channel may be based on one or more standards from a group including 2G, 3G, 4G, Wi-Fi, WiMAX, Bluetooth, GSM, UMTS, LTE-Advanced and Li-Fi standards. In such an instance, the image is transmitted by the computing device using the wireless communication channel to the processor. In one example, the computing device is a smartphone comprising a camera. In such an example, the smartphone comprises a software application (or app) installed thereon. Furthermore, the user is operable to use the app to operate the camera of the computing device to take the image of the skin of the user. Subsequently, the captured image is sent to the processor by the app via the wireless communication channel.

In one embodiment, the processor is arranged in the computing device. In another embodiment, the processor is arranged at a remote server. It will be appreciated that the arrangement of the processor depends on an amount of data that is sent thereto for analysis.

The method comprises analysing the at least one image to determine at least one skin characteristic of the user. For example, the at least one skin characteristic may include a radiant complexion, a dull complexion, a rough complexion, a shiny skin, blackheads, pores, red patches, elasticity, moisture content (or oily skin), dryness (or dry skin), visible lines, wrinkles, pimples, blemishes and other imperfections (such as lesions). Optionally, the user may input one or more skin characteristics of the skin thereof, such as, using the computing device (for example, using a touchscreen associated with a smartphone, a keyboard associated with a laptop and so forth). The skin characteristics input by the user may include allergies, itchy sensation, burning sensation, sensitivity of the skin and so forth. In one embodiment, analysing the at least one image comprises automatic determination of the at least one skin characteristic of the user using an artificial intelligence algorithm. The artificial intelligence algorithm is employed by a software application hosted on the processor. Furthermore, the software application is operable to analyse the image of the skin of the user to determine the at least one skin characteristic. The software may be trained to perform such analysis of the image of the skin of the user using, for example, deep learning or transfer learning techniques. For example, the software application can be trained using images of various users associated with known skin characteristics.

Alternatively, analysing the at least one image comprises manual determination of the at least one skin characteristic of the user by a third party. In one example, the third party is a doctor (such as a dermatologist), a skin care professional (such as a dermal clinician), and/or another person or service capable of determining the skin characteristic of the user from the image. In such an example, the processor is communicably coupled with a third party computing device associated with the third party, wherein the third party is provided access to the image of the skin of the user via the third party computing device. Furthermore, the third party manually analyses the image to determine the at least one skin characteristic and provides a result of such determination to the processor using the third party computing device (such as, using a software application or app installed on the third party computing device).

In one embodiment, the method further comprises determining a skin type of the user. For example, based on the at least one skin characteristic of the user, the skin type may be determined. The skin type may be one of a normal skin, a dry skin, an oily skin, a sensitive skin, a combination skin and so forth. The normal skin type corresponds to skin with an ideal balance of moisture content and production of oil (or sebum). The normal skin type may be determined if the at least one skin characteristic includes a few imperfections, barely visible pores, and a radiant complexion. The dry skin type corresponds to dry and flaky skin. The dry skin may be determined if the at least one skin characteristic includes dull complexion, redness and visible lines. The oily skin type corresponds to greasy and shiny skin. The oily skin may be detected if the at least one skin characteristic includes enlarged pores, shiny complexion, blackheads and pimples. The sensitive skin type corresponds to a most delicate skin. The sensitive skin may be determined if the at least one skin characteristic includes redness, burning and dryness. The combination skin type corresponds to a combination of skin characteristics associated with two or more different skin types. The combination skin type is the most common skin type. The combination skin may be detected if the one or more skin characteristics include large pores, blackheads and shiny skin.

The method comprises receiving at least one of indoor environmental data corresponding to an accommodation associated with the user and/or outdoor environmental data corresponding to a location of the user. The accommodation associated with the user is an indoor environment where the user performs most of their daily activities. In one embodiment, the accommodation is one of a home, an office and a vehicle. The processor is configured to receive indoor environmental data corresponding to the accommodation associated with the user. According to an embodiment, the indoor environmental data is generated by an automation device installed at the accommodation. The automation device may be a home automation system, an office or building automation system, or a car climate control system.

Alternatively, the location of the user corresponds to an outdoor environment that the user is present therein. Such a location may be a location of an environment where the user spends a significant amount of time, such as, an outdoor workplace (for example, a construction site), a location that the user may be travelling to, a location of an outdoor activity that the user may be partaking in (such as cycling) and so forth. In one embodiment, the outdoor environmental data is received from a weather server configured to provide weather information associated with the location of the user. For example, the location of the user is received from the computing device associated with the user (such as, from a GPS module associated with the computing device). In such an example, the processor is configured to receive the weather information associated with the received location of the user from the weather server. Furthermore, the weather server is configured to provide outdoor environmental data, such as local weather and weather forecast corresponding to the location of the user.

According to an embodiment, at least one of the indoor environmental data and/or the outdoor environmental data is transmitted through a wireless communication channel. For example, the automation device and/or the weather server is communicably coupled to the processor for communication therebetween. The communication may be in one way, i.e. the automation device communicates with the processor, or it can be in two ways, i.e. the automation device communicates (or sends gathered indoor environmental data) with the processor and the processor communicates (or sends information, such as instructions) with the automation device. The communication may be carried out through a wireless communication channel. The wireless communication channel can be based on one or more standards from a group including 2G, 3G, 4G, Wi-Fi, Wi-MAX, Bluetooth, GSM, UMTS, LTE-Advanced and Li-Fi standards. Alternatively, the communication may be carried out through a wired communication channel. The wired communication channel can be based on one or more of the Public Switched Telephone Network (PSTN), cable, and Ethernet (LAN, MAN, WAN).

According to an embodiment, the user computing device is configured to communicate with the automation device. The communication may take place via a wired or wireless communication channel, as discussed above.

In one embodiment, the method further comprises detecting at least one environmental value corresponding to at least one environmental variable associated with the accommodation and/or at the location of the user. For example, the indoor environmental data and/or the outdoor environmental data received can comprise the one or more environmental values. In an embodiment, the at least one environmental variable comprises temperature, humidity, air quality, air temperature, relative humidity, barometric pressure, wind speed, wind direction, rainfall, solar flux density, total solar flux, dew point temperature, wet bulb temperature, heat index, wind run, wind gust and/or amount of one or more pollutants. For example, the one or more environmental variables associated with the indoor accommodation can include temperature, humidity and indoor air quality. The indoor air quality may be affected by gases (including carbon monoxide, radon, volatile organic compounds), particulates, microbial contaminants (mould, bacteria), or any other substance that can induce adverse health conditions. Optionally, the automation device installed at the accommodation comprises a sensor that is configured to detect the at least one environmental value. In another example, the one or more environmental variables associated with the outdoor environment at the location of the user can include, but not limited to, air temperature, relative humidity, barometric pressure, wind speed, wind direction, rainfall, solar flux density, total solar flux, dew point temperature, wet bulb temperature, heat index, wind run, and wind gust. For example, the outdoor environmental data can include environmental values (such as, measurements) associated with one or more pollutants, including, but not limited to PM₁₀, PM_{2.5}, NO₂, SO₂, CO, O₃, NH₃, and Pb.

In one embodiment, the method further comprises receiving at least one of an indoor time period spent by the user in an indoor environment of the accommodation associated with the user and/or an outdoor time period spent by the user in an outdoor environment at the location of the user. For example, the computing device associated with the user is configured to record a time spent by the user at various places and subsequently, associate the recorded time with locations of the places to determine the indoor time period (such as, when the location of the place corresponds to the accommodation associated with the user) and the outdoor time period for the user. Furthermore, the indoor time period and/or the outdoor time period is sent by the computing device to the processor. The processor is configured to compare the indoor time period with the outdoor time period, to determine a higher time period. For example, when the user spends 14 hours at the indoor environment of the accommodation and 10 hours at the outdoor environment at the location, the higher time period is the indoor time period. In one embodiment, the method further comprises receiving at least one of the indoor environmental data and/or the outdoor environmental data based on a comparison between the indoor time period and the outdoor time period. For example, when the indoor time period is substantially more (*substantially more* is to be construed to be in a range of 5 to 50% of total time period associated with the user) than the outdoor time period, then the processor is configured to receive only the indoor environmental data. Alternatively, when the indoor time period is substantially similar (*substantially similar* is to be construed to be in a range of 0 to 5% of the total time period associated with the user) as the outdoor time period, the processor is configured to receive the indoor environmental data as well as the outdoor environmental data.

According to an embodiment, the method further comprises determination of a trend for the user based on the received indoor time period and/or the received outdoor time period. For example, the processor is configured to compare received indoor time period and outdoor time period for the user for an extended duration (such as a week, a month, six months and so forth) to determine the trend for the user. Such a trend enables to determine if the user spends the majority of their time in an indoor environment, at an outdoor environment or if the user spends a substantially equal amount (such as, in a range of 45 to 50% of their time period) of time in the indoor environment as the outdoor environment.

The method comprises identifying the at least one skin care product based on the determined at least one skin characteristic of the user, and at least one of the received indoor environmental data and/or the received outdoor environmental data. The determined at least one skin characteristic (including, but not limited to, the skin type, one or more allergies and so forth) of the user is correlated with the received indoor environmental data and/or the received outdoor environmental data. Subsequently, the at least one skin care product is identified that can improve the at least one skin characteristic and provide relief from the environmental variables experienced by the user within the accommodation or at the outdoor environment at the location of the user. For example, the determined at least one skin characteristic of the user is dry skin condition and a received indoor environmental data at an accommodation associated with the user indicates low-humidity (such that the higher time period is the indoor time period and the user spends the majority of their time within the accommodation). In such an example, the identified at least one skin care product relates to dry skin moisturizers that can provide relief for the dry skin condition of the user, while providing relief from further skin dryness caused due to the low-humidity at the accommodation of the user. In another example, the identified at least one skin characteristic is associated with burning (such as, due to sunburn) and the received outdoor environmental data (such as a weather forecast) at a location where the user is required to be (that can be obtained as an input by the user from the computing device associated therewith), indicates bright weather (such as, due to presence of intense sunlight that may cause further radiation burning of the skin of the user). In such an example, the identified at least one skin care product based on the determined at least one skin characteristic and the received outdoor environmental data relates to sunscreen products.

In yet another example, the indoor time period spent by the user for an extended duration (such as three days, a week, a month and so forth) is determined to be substantially similar to the outdoor time period spent by the user. Furthermore, the determined at least one skin characteristic for the user is associated with redness (such as, due to skin sensitivity). Moreover, indoor environmental data as well as outdoor environmental data indicate presence of high amount of atmospheric pollutants. In such an instance, the identified at least one skin care product based on the determined at least one skin characteristic, the received indoor environmental data and the received outdoor environmental data relates to skin care products capable of protecting the skin of the user from the pollutants.

Optionally, when environmental variables associated with a normal weather are indicated by received indoor environmental data and/or received outdoor environmental data, the at least one skin care product is identified based on the at least one skin characteristic of the user.. Optionally, when the at least one skin characteristic of the user indicates normal skin, the at least one skin care product is identified based on the at least one environmental value corresponding to at least one environmental variable associated with the accommodation and/or at the location of the user. For example, when the user has normal skin and environmental value corresponding to environmental variable of humidity at the accommodation associated with the user is low, the identified at least one skin care product relates to skin moisturizers.

In one embodiment, the method further comprises using a set of filters for identifying an appropriate skin care product from a catalogue of skin care products. For example, the catalogue of skin care products are filtered using a first filter based on at least one skin characteristic of the skin of the user to obtain a first list of skin care products. Next, a second filter based on outdoor environmental data is used to obtain a second list of skin care products from the first list of skin care products. Then, a third filter based on indoor environmental data is used to obtain a third list of skin care products from the second list of skin care products. The third list of skin care products may be shared with the user as a recommended list of skin care products. The user may then purchase and use one or more skin care products from the third list. For example, a catalogue of skin care products comprises a list of 100,000 different skin care products with various attributes. The user may visit an online portal or use a software application (example, a smartphone application or app) to provide personal information such as name, sex, age, location and even known allergies to a processor associated with a skin care product recommending arrangement. Furthermore, the personal information provided by the user may be used to filter the list of 100,000 skin care products to a selection to 10,000 skin care products. Next, the user may send a pre-treatment image of a skin thereof to the online portal. Subsequently, the image is analysed and at least one skin characteristic determined from the analysis is used to filter the list of 10,000 skin care products to a selection to 1,000 skin care products. Moreover, information about local weather and weather trends may be obtained (such as, from a weather server capable of providing such information) at the location of the user. Then, the list of 1,000 skin care products can be filtered based on the information about local weather and weather trends, to a selection to 100 skin care products. For example, if the location is associated with cold weather, the list is different, than if the location is associated with a hot and humid weather. Thereafter, an indoor automation device can be accessed to obtain indoor environment data at an accommodation associated with the user. Then, the list of 100 skin care products is further filtered to a selection to 10 skin care products based on the indoor environment data. This list may be shared with the user as a recommended list of skin care products. The user may purchase one or more of the 10 skin care products from the recommended list. Finally, the user may send a post-treatment image to the skin care product recommending arrangement to enable determination of efficacy of the one or more of the 10 skin care products.

According to one embodiment, the method further comprises receiving product information, brand information and relevant attributes of multiple skin care products from a product server and filtering the multiple skin care products to identify the at least one skin care product. For example, when the identified at least one skin care product comprises multiple products associated with similar attributes (such that the skin care products are adapted for similar skin characteristics and for use in similar environmental conditions), the multiple skin care products may be filtered to identify the at least one skin care product based on at least one of price, usage history of a product by the user, a brand affiliation of the user (optionally, brand affiliation of a third party such as a doctor and/or an owner of a skin care product recommending arrangement responsible for recommending the at least one skin care product to the user), an efficacy of the product (as described herein below) and so forth. For example, information comprising a list of skin care products purchased by the user within a preceding 6 or 12 months period is received, and the list is used as a basis for identifying the at least one skin care product. Furthermore, such information about the skin care products purchased by the user can be obtained, for example, from purchase actions carried out by the user on the internet, or the user may manually enter such information using the computing device.

The method comprises providing a recommendation comprising the identified at least one skin care product to the user. For example, the processor is configured to provide the recommendation to the computing device associated with the user. Such a recommendation can comprise a list of one or more identified skin care products, a recommended usage schedule for the at least one identified skin care product (such as, twice a day or before going outdoors), a reason for the identification of the at least one skin care product (such as, dry skin associated with the user and weather forecast indicating low-humidity), a price of the identified at least one skin care product, generic alternatives that are available for the identified at least one skin care product and so forth. Optionally, the recommendation may include hyperlinks to an online store for each of the identified at least one skin care product. For example, the hyperlinks can be affiliate links, such that if the user purchases a skin care product using the affiliate links, a certain percentage of an amount spent by the user is paid to the owner of a skin care product recommending arrangement responsible for recommending the at least one skin care product to the user. Such a skin care product recommending arrangement may be installed on an online server, such as a cloud server. Furthermore, such an online server may host the online store for the user to select and order skin care products. For example, the online server is communicably coupled with the computing device of the user. In such an example, the user can use the computing device, such as a smartphone, to browse the online shop, select the identified at least one skin care product from various skin care products and purchase the product (such as, by inputting payment and shipping details for the product). In one example, the online store is associated with the owner of the skin care product recommending arrangement.

Optionally, the recommendation can also comprise advice to the user to take care of their skin. Such an advice may include avoiding over-cleansing of skin, avoiding using too cold or hot water, usage of mild soaps and/or body washes, avoiding direct sunlight, using a broad spectrum sunscreen, washing the skin gently, never wearing makeup (until treatment of the skin of the user is on-going), buying clothing especially adapted for sensitive skin, intake of a good diet, staying well hydrated, moisturizing often, avoiding smoking, consulting a doctor, consulting a dermatologist and suchlike.

Optionally, the recommendation is provided to the user based on a predicted weather forecast. For example, the processor may be configured to receive regular weather forecasts from the weather server, and to take this into account for identifying the at least one skin care product. Subsequently, a recommendation is provided to the user comprising the identified at least one skin care product, based on the weather forecast. In one example, if the weather forecast predicts a significant drop in temperature, the system may instruct the user to prepare his or her skin for the upcoming change of temperature by recommending use of a dry skin moisturizer or a cold cream. In another example, the user may enter information of an upcoming travel (such as, using the computing device), for example, the information comprising a location of the upcoming travel and/or an estimated duration of travel (such as flight time). In such an example, the user is recommended appropriate skin care products to either use beforehand to prepare their skin for the travel, or skin care products that the user may need to take with them while travelling.

In one embodiment, the method further comprises providing an alert to the user when a recommended skin care product is expected to soon run out (based on a recommendation of the skin care product to the user in the past; a number of each skin care product recommended to other users; an amount of skin care products estimated to have been used at each time a recommendation was provided; a current stock of the skin care products; a size of the product container, such as, based on a number of uses of the product associated with each product container; and so forth), or when a particular skin care product package has presumably been open for a period exceeding a recommended time of use (or when such time of use will soon expire). It will be appreciated that such an alert would enable the user to re-purchase their preferred skin care products in time, without a risk of being run out of the skin care products.

According to an embodiment, the automation device installed at the accommodation comprises at least one sensor configured to detect at least one environmental value corresponding to at least one environmental variable associated with the accommodation; and at least one controller configured to automatically control at least one environment-modifier based on the at least one environmental value. The at least one environment-modifier comprises at least one of an air conditioner, a heater, a cooler, a humidifier, a de-humidifier, an air-ionizer and a light source. For example, the environment-modifier associated with the automation device is controlled by the processor, to further assist to provide relief to the at least one skin characteristic of the user. For example, the at least one skin characteristic of the user is associated with a dry skin condition. In such an example, subsequent to providing a recommendation of at least one skin care product corresponding to dry skin moisturizers, the processor is configured to control a humidifier associated with the accommodation of the user for providing relief to the dry skin condition of the user. Alternatively, the environment-modifier is controlled based on usage instructions associated with a recommended at least one skin care product. For example, the user may be required to be present in a pollution-free environment for duration of one hour subsequent to using the recommended at least one skin care product. In such an example, the environment-modifier implemented as an air-ionizer is activated for the duration of one hour subsequent to the user using the recommended at least one skin care product (such that use of the skin care product can be indicated by the user to the automation device using the computing device), to increase an efficacy thereof.

According to an embodiment, the method further comprises receiving a pre-treatment image of the skin of the user prior to the user using the recommended at least one skin care product. For example, the user is required to capture the pre-treatment image of an area of the skin where the user intends to use the recommended skin care product, prior to using the recommended skin care product. Alternatively, the at least one image provided by the computing device to the processor is used as the pre-treatment image. In the same embodiment, the method further comprises receiving a post-treatment image of the skin of the user subsequent to the user using the recommended at least one skin care product. For example, the user may be required to use the recommended skin care product for a specific duration, such as two weeks, a month or six months. In such an example, the user may be required to capture the post-treatment image of the area of the skin where the user used the recommended skin care product for the duration. In the same embodiment, the method further comprises determining an efficacy of the at least one skin care product based on a comparative analysis between the pre-treatment image and the post-treatment image. The pre-treatment image and the post-treatment image can be compared by a software application that is configured to employ an artificial intelligence algorithm. Such a software application is configured to compare the pre-treatment image and the post-treatment image to determine the efficacy of the recommended at least one skin care product, such as, based on a difference in the at least one skin characteristic of the user in the pre-treatment and post-treatment images. For example, the user is recommended a skin care product for premature aging of skin. Furthermore, the user is recommended to use the product for duration of three months. In such an instance, the software application is operable to compare image of skin (such as image of face) of the user prior to commencing the treatment and subsequent to the duration of three months, to determine a difference in skin characteristics such as presence of wrinkles, blackheads, loose skin, lesions and so forth. Subsequently, the efficacy of the skin care product is determined as a numerical value with respect to a predetermined threshold, for example, 50%, 80% or 92%. Thus, a feedback loop can be established by enabling the user to provide the pre-treatment image and the post-treatment image, to determine the efficacy of the recommended skin care product.

In one embodiment, the method further comprises storing the determined efficacy of the at least one skin care product in the product server. For example, the efficacy of various skin care products that are determined with respect to different users thereof, are stored in the product server (such as, in a database associated therewith). In such an example, prior to recommending an identified at least one skin care product to a user, the efficacy of the identified at least one skin care product is compared with efficacies of similar products (such as, skin care products with similar attributes). Subsequently, a skin care product associated with highest efficacy with respect to the similar skin care products may be recommended to the user.

In an embodiment, the method further comprises maintaining a big data database. For example, the big data database is associated with the product server. The big data database may include data for multiple skin care products, including, their names, description, reviews, price, deals, availability, and efficacy based on a comparative analysis between a pre-treatment image, received from various users prior to each user using the skin care products and a post-treatment image, obtained from the various users subsequent to each user using the skin care products. Furthermore, the big data database may include data about the users, automation systems, weather information providers, environment-modifier devices, and usage advice of the various skin care products. Furthermore, the big data database is communicably coupled with the processor that is configured to host the software application thereon and the software application employs an artificial intelligence algorithm to recommend skin care products to users. The software application is configured to use machine learning techniques by employing the information stored in the big data database. Such machine learning enables the software application to adapt and improve, thereby, enabling recommendation of better and more appropriate skin care products to users over a period of time.

The present description as described above also relates to the system. The various embodiments and variants disclosed above apply mutatis mutandis to the system.

The system for recommending at least one skin care product to a user comprises a computing device for capturing at least one image of a skin of the user; an automation device installed at an accommodation associated with the user, the automation device being configured to generate indoor environmental data corresponding to the accommodation; a weather server configured to provide outdoor environmental data corresponding to a location of the user; and a processor. The processor is configured to receive the at least one image of the skin of the user from the user computing device; analyse the at least one image to determine at least one skin characteristic of the user; receive at least one of indoor environmental data corresponding to the accommodation associated with the user from the automation device, and/or outdoor environmental data corresponding to the location of the user from the weather server; identify the at least one skin care product based on the at least one skin characteristic, and at least one of the received indoor environmental data and/or the received outdoor environmental data; and transmit a recommendation comprising the identified at least one skin care product to the computing device.

The system may also include a memory which may be operably connected to the processor. The memory may be configured to store one or more computer instructions and data. The computer instructions may correspond to the method explained in detail above, such that when the computer instructions are executed by the processor, the method is executed. The data may include, but is not limited to, a catalogue of skin care products, personal information associated with various users, user credentials to access the automation device, a product server and a weather server, and so forth.

Optionally, the processor is further configured to receive at least one of an indoor time period spent by the user in an indoor environment of the accommodation associated with the user; and/or an outdoor time period spent by the user in an outdoor environment at the location of the user.

Optionally, the processor is configured to compare the indoor time period and the outdoor time period; and receive at least one of the indoor environmental data and/or the outdoor environmental data based on the comparison between the indoor time period and the outdoor time period.

Optionally, the automation device comprises at least one sensor configured to detect at least one environmental value corresponding to at least one environmental variable associated with the accommodation; and at least one controller configured to automatically control at least one environment-modifier based on the at least one environmental value, wherein the at least one environmental variable comprises at least one of temperature, humidity and air quality, and the at least one environment-modifier comprises at least one of an air conditioner, a heater, a cooler, a humidifier, a de-humidifier, an air-ionizer and a light source.

Optionally, the processor is configured to use an artificial intelligence algorithm for analysing the at least one image to determine the at least one skin characteristic of the user.

Optionally, the system further comprises a product server communicably coupled with the processor, the processor being configured to receive product information, brand information and relevant attributes of multiple skin care products from the product server; and filter the multiple skin care products to identify the at least one skin care product.

Optionally, the computing device is configured to communicate with the automation device through a wireless communication channel. Optionally, the processor is configured to receive a pre-treatment image of the skin of the user prior to the user using the at least one skin care product; receive a post-treatment image of the skin of the user subsequent to the user using the at least one skin care product; and determine an efficacy of the at least one skin care product based on a comparative analysis between the pre-treatment image and the post-treatment image.

Optionally, the processor is configured to store the determined efficacy of the at least one skin care product in the product server. The processor can be arranged in the computing device. Optionally, the computing device comprises a camera. The accommodation can be for example one of a home, an office and a vehicle.

### DETAILED DESCRIPTION OF THE DRAWINGS

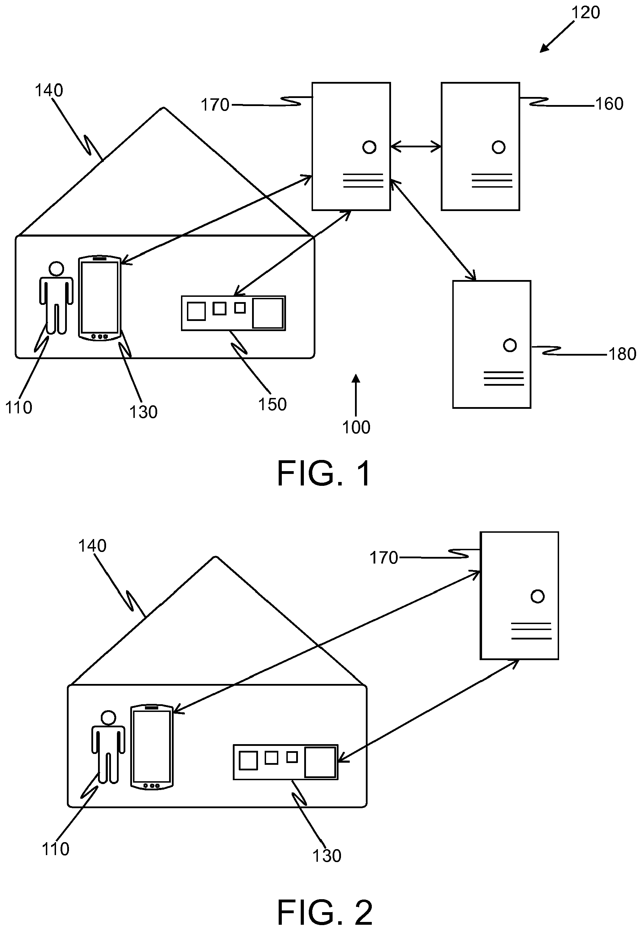

Referring to FIG. 1, there is shown a schematic diagram of a system **100** for recommending at least one skin care product to a user **110,** in accordance with an embodiment of the present disclosure. The system is implemented in an environment **120.** As shown, the environment **120** includes the user **110** and a computing device **130** associated with the user **110.** Furthermore, the user **110** is present in an accommodation **140.** The user **110** uses the computing device **130** included in the system **100** to capture at least one image of a skin thereof. Furthermore, the system **100** comprises an automation device **150** installed at the accommodation **140** associated with the user **110,** the automation device **150** being configured to generate indoor environmental data corresponding to the accommodation **140.** Moreover, the system **100** comprises a weather server **160** configured to provide outdoor environmental data corresponding to a location of the user (such as, outdoor environmental data corresponding to outside of the accommodation 130). The system **100** comprises a processor **170** communicably coupled with the computing device **130,** the automation device **150** and the weather server **160.** The processor **170** is configured to receive the at least one image of the skin of the user **110** from the computing device **130** and analyse the at least one image to determine at least one skin characteristic of the user **110.** Furthermore, the processor **170** is configured to receive at least one of indoor environmental data corresponding to the accommodation **140** associated with the user **110** from the automation device **150,** and/or outdoor environmental data corresponding to the location of the user from the weather server **160.** Moreover, the processor **170** is configured to identify the at least one skin care product based on the at least one skin characteristic, and at least one of the received indoor environmental data and/or the received outdoor environmental data. As shown, the processor **170** is communicably coupled to a product server **180.** The processor **170** is configured to receive product information, brand information and relevant attributes of multiple skin care products from the product server **180.** Furthermore, the processor **170** is configured to transmit a recommendation comprising the identified at least one skin care product to the computing device **130.**

Referring to FIG. 2, there is shown the system **100** of FIG. 1, in accordance with another embodiment of the present disclosure. As shown, the processor **170** is communicably coupled with the automation device **130.** The processor **170** receives the indoor environmental data directly from the automation device **130.**

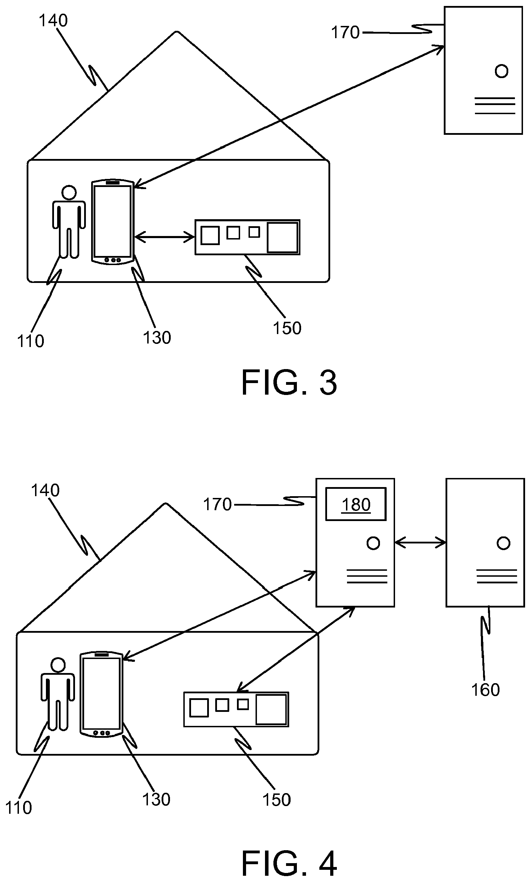

Referring to FIG. 3, there is shown the system **100** of FIG. 1, in accordance with yet another embodiment of the present disclosure. As shown, the processor **170** is communicably coupled with the computing device **130.** Furthermore, the computing device **130** is communicably coupled with the automation device **150.** Therefore, the processor **170** receives the indoor environmental data from the computing device **130,** which further receives the indoor environmental data from the automation device **150.**

Referring to FIG. 4, there is shown the system **100** of FIG. 1, in accordance with yet another embodiment of the present disclosure. As shown, the product server **180** is incorporated within the processor **170.**

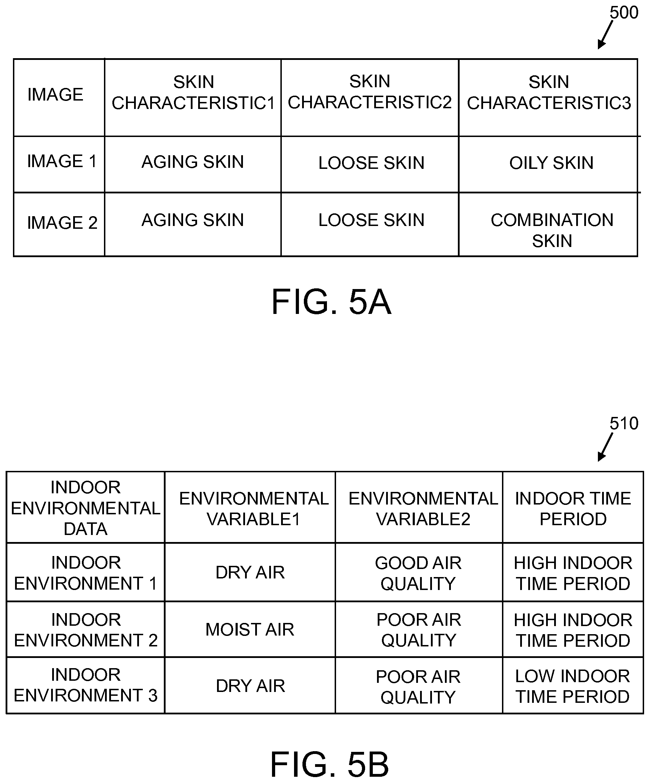

Referring to FIG. 5A, there is shown a table **500** representing skin characteristics of users (such as the user **110** of FIG. 1) determined by analysis of an image of skin thereof, in accordance with an embodiment of the present disclosure. The determined skin characteristics include Skin Characteristic1, Skin Characteristic2 and Skin Characteristic3. Furthermore, the skin characteristics are determined from an Image1 associated with a first user and an Image2 associated with a second user. As shown, the determined skin characteristics include skin characteristics such as aging skin, loose skin, combination skin and so forth.

Referring to FIG. 5B, there is shown a table **510** representing indoor environmental data associated with various indoor environments (such as the accommodation **140** of FIG. 1), in accordance with an embodiment of the present disclosure. As shown, the indoor environmental data is associated with an Indoor Environment 1, an Indoor Environment 2 and an Indoor Environment 3. Furthermore, the indoor environmental data includes Environmental Variable1 and Environmental Variable2 associated with moisture content in air and air quality respectively. Moreover, the indoor environmental data includes Indoor Time Period associated with time spent by a user (such as the first or second user of FIG. 5A) within the indoor environments.

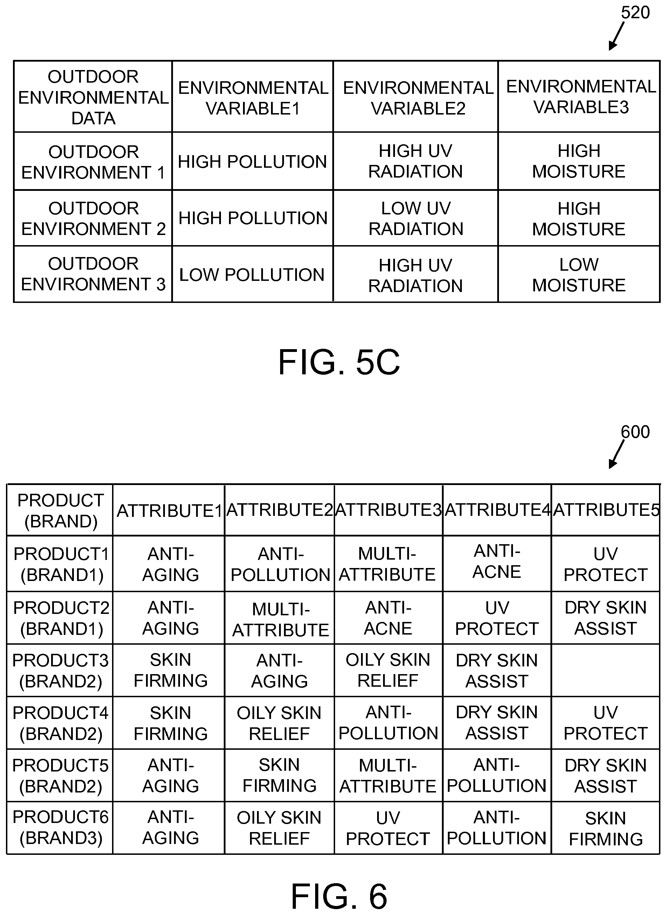

Referring to FIG. 5C, there is shown a table **520** representing outdoor environmental data associated with various outdoor environments (such as outside of the accommodation **140** of FIG. 1), in accordance with an embodiment of the present disclosure. The outdoor environmental data is associated with an Outdoor Environment 1, an Outdoor Environment 2 and an Outdoor Environment 3. Furthermore, the outdoor environmental data comprises environmental variables such as Environmental Variable1, Environmental Variable2 and Environmental Variable3, wherein the environmental variables comprise an amount of one or more pollutants (indicated as an aggregate of the pollutants, such as, high pollution and low pollution), UV radiation and humidity associated with the outdoor environments.

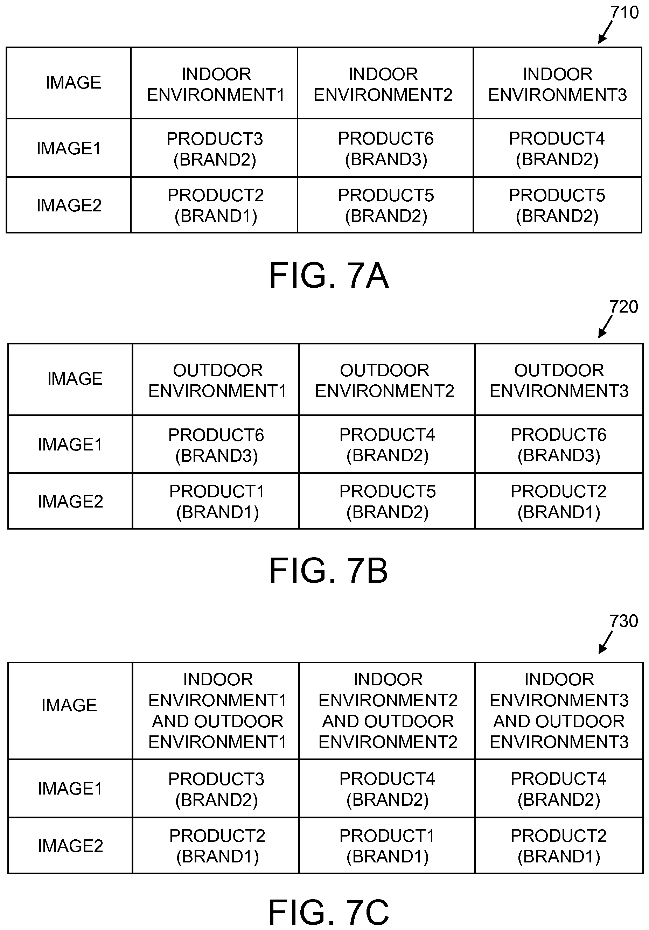

Referring to FIG. 6, there is shown a table **600** representing product information, brand information and relevant attributes of multiple skin care products received from a product server (such as the product server **180** of FIG. 1), in accordance with an embodiment of the present disclosure. As shown, attributes including Attribute1-5 are represented, wherein the attributes are associated with six different skin care products. Furthermore, the skin care products include Product1 and Product2 associated with a Brand1; Product3, Product4 and Product5 associated with a Brand2; and a Product6 associated with a Brand3. As shown, the attributes include anti-aging, anti-pollution, dry skin assist and so forth. Referring to FIG. 7A, there is shown a table **710** corresponding to the tables **500, 510** and **600** of FIGs. 5A, 5B and 6 respectively, representing skin care products identified for the first user and the second user, in accordance with an embodiment of the present disclosure. The skin care products are identified based on the skin characteristics of the users (represented in FIG. 5A), indoor environmental data (represented in FIG. 5B) and relevant attributes of the multiple skin care products (represented in FIG. 6). As shown, when the first user (associated with Image1) is associated with the Indoor Environment1, the skin care product identified is the Product3 by Brand2. In such an instance, the Product3 is associated with relevant attributes that are capable of providing relief to skin characteristics of the user, such as the Attribute2 of anti-aging (associated with Skin Characteristic1 of aging skin of the user), the Attribute1 of skin firming (associated with Skin Characteristic2 of loose skin of the user) and the Attribute3 of oily skin relief (associated with Skin Characteristic1 of oily skin). Furthermore, as the indoor environmental data for Indoor Environment1 is associated with dry air and high indoor time period, the Product3 is associated with Attribute4 of dry skin assist.

Referring to FIG. 7B, there is shown a table **720** corresponding to the tables **500, 520** and **600** of FIGs. 5A, 5C and 6 respectively, representing skin care products identified for the first user and the second user, in accordance with an embodiment of the present disclosure. The skin care products are identified based on the skin characteristics of the users (represented in FIG. 5A), outdoor environmental data (represented in FIG. 5C) and the relevant attributes of the multiple skin care products (represented in FIG. 6). As shown, when the second user (associated with Image2) is associated with the Outdoor Environments, the skin care product identified is the Product2 by Brand1. The Product5 is associated with relevant attributes that are capable of providing relief to skin characteristics of the user, such as the Attribute1 of anti-aging (associated with Skin Characteristic1 of aging skin of the second user) and the Attribute3 of multi-attribute (associated with Skin Characteristics of combination skin of the second user). Furthermore, as the outdoor environmental data for Outdoor Environments is associated with the Environmental Variable2 of high UV radiation, the identified Product2 is associated with the Attribute4 of UV protect. Moreover, as the outdoor environmental data for Outdoor Environments is associated with the Environmental Variable3 of low moisture, the identified Product2 is associated with the Attribute5 of dry skin assist.

Referring to FIG. 7C, there is shown a table **730** corresponding to the tables **500, 510, 520** and **600** of FIGs. 5A, 5B, 5C and 6 respectively, representing skin care products identified for the first user and the second user, in accordance with an embodiment of the present disclosure. The skin care products are identified based on the skin characteristics of the users (represented in FIG. 5A), indoor environmental data (represented in FIG. 5B), outdoor environmental data (represented in FIG. 5C) and the relevant attributes of the multiple skin care products (represented in FIG. 6). As shown, when the first user (associated with Image1) is associated with the Indoor Environments and the Outdoor Environments, the skin care product identified for the user is the Product4 by Brand2. In such an instance, the Product4 is associated with relevant attributes that are capable of providing relief to skin characteristics of the user, such as the Attribute1 of skin firming (associated with Skin Characteristic2 of loose skin of the first user) and the Attribute2 of oily skin relief (associated with Skin Characteristics of oily skin of the first user). Furthermore, as the indoor environmental data for the Indoor Environments is associated with the Environmental Variable1 of dry air and the Environmental Variable2 of poor air quality, the identified skin care product is associated with the Attribute4 of dry skin assist and the Attributes of anti-pollution respectively. Moreover, as the outdoor environmental data for Outdoor Environments is associated with the Environmental Variable2 of high UV radiation, the identified Product4 is associated with the Attribute5 of UV protect. Also, as the outdoor environmental data for Outdoor Environments is associated with the Environmental Variable3 of low moisture, the identified Product2 is associated with the Attribute4 of dry skin assist.

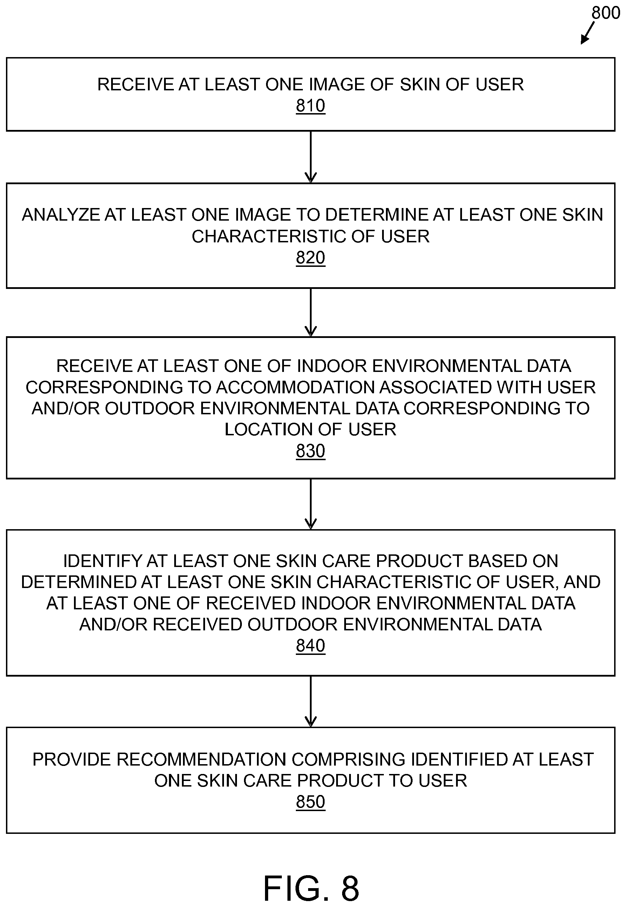

Referring to FIG. 8, there are shown steps of a method **800** of recommending at least one skin care product to a user, in accordance with an embodiment of the present disclosure. At a step **810,** at least one image of a skin of the user is received. At a step **820,** the at least one image is analysed to determine at least one skin characteristic of the user. At a step **830,** at least one of indoor environmental data corresponding to an accommodation associated with the user and/or outdoor environmental data corresponding to a location of the user is received. At a step **840,** the at least one skin care product is identified based on the determined at least one skin characteristic of the user, and at least one of the received indoor environmental data and/or the received outdoor environmental data. At a step **850,** a recommendation is provided comprising the identified at least one skin care product to the user.

The steps **810** to **850** are only illustrative and other alternatives can also be provided where one or more steps are added, one or more steps are removed, or one or more steps are provided in a different sequence without departing from the scope of the claims herein. In an example, the method further comprises receiving at least one of an indoor time period spent by the user in an indoor environment of the accommodation associated with the user; and/or an outdoor time period spent by the user in an outdoor environment at the location of the user. In another example, the method further comprises receiving at least one of the indoor environmental data and/or the outdoor environmental data at **830** based on a comparison between the indoor time period and the outdoor time period. In yet another example, analysing the at least one image at **820** comprises automatic determination of the at least one skin characteristic of the user using an artificial intelligence algorithm; or manual determination of the at least one skin characteristic of the user by a third party.

Modifications to embodiments of the present disclosure described in the foregoing are possible without departing from the scope of the present disclosure as defined by the accompanying claims. Expressions such as including , comprising , incorporating , have , is used to describe and claim the present disclosure are intended to be construed in a non-exclusive manner, namely allowing for items, components or elements not explicitly described also to be present. Reference to the singular is also to be construed to relate to the plural.

## Claims

1. A method of recommending at least one skin care product to a user, the method comprising steps of
(i) receiving at least one image of a skin of the user;
(ii) analysing the at least one image to determine at least one skin characteristic of the user;
(iii) receiving at least one of:
- indoor environmental data corresponding to an accommodation associated with the user;
- outdoor environmental data corresponding to a location of the user;
(iv) identifying the at least one skin care product based on the determined at least one skin characteristic of the user, and at least one of the received indoor environmental data and/or the received outdoor environmental data; and
(v) providing a recommendation comprising the identified at least one skin care product to the user.

2. A method according to claim 1, further comprising receiving at least one of
- an indoor time period spent by the user in an indoor environment of the accommodation associated with the user;
- an outdoor time period spent by the user in an outdoor environment at the location of the user,
and optionally further comprising receiving at least one of the indoor environmental data and/or the outdoor environmental data at step (iii), based on a comparison between the indoor time period and the outdoor time period.

3. A method according to any one of the preceding claims, wherein analysing the at least one image at step (ii) comprises
- automatic determination of the at least one skin characteristic of the user using an artificial intelligence algorithm; or
- manual determination of the at least one skin characteristic of the user by a third party.

4. A method according to any one of the preceding claims, wherein identification of the at least one skin care product at step (iv) comprises:
- receiving product information, brand information and relevant attributes of multiple skin care products from a product server; and
- filtering the multiple skin care products to identify the at least one skin care product.

5. A method according to any one of the preceding claims, wherein the indoor environmental data is generated by an automation device installed at the accommodation and/or the outdoor environmental data is received from a weather server configured to provide weather information associated with the location of the user.

6. A method according to any of the preceding claims, further comprising detecting at least one environmental value corresponding to at least one environmental variable associated with the accommodation and/or at the location of the user, wherein the at least one environmental variable preferably comprises temperature, humidity, air quality, air temperature, relative humidity, barometric pressure, wind speed, wind direction, rainfall, solar flux density, total solar flux, dew point temperature, wet bulb temperature, heat index, wind run, wind gust and/or amount of one or more pollutants.

7. A method according to any of the preceding claims, wherein at least one of the indoor environmental data and/or the outdoor environmental data is transmitted through a wireless communication channel.

8. A method according to any of the preceding claims, further comprising:
- receiving a pre-treatment image of the skin of the user prior to the user using the recommended at least one skin care product;
- receiving a post-treatment image of the skin of the user subsequent to the user using the recommended at least one skin care product; and
- determining an efficacy of the at least one skin care product based on a comparative analysis between the pre-treatment image and the post-treatment image,
and optionally comprising storing the determined efficacy of the at least one skin care product in the product server.

9. A system for recommending at least one skin care product to a user, the system comprising:
- a computing device for capturing at least one image of a skin of the user;
- an automation device installed at an accommodation associated with the user, the automation device being configured to generate indoor environmental data corresponding to the accommodation;
- a weather server configured to provide outdoor environmental data corresponding to a location of the user;
and
- a processor configured to
- receive the at least one image of the skin of the user from the user computing device;
- analyse the at least one image to determine at least one skin characteristic of the user;
- receive at least one of:
- indoor environmental data corresponding to the accommodation associated with the user from the automation device;
- outdoor environmental data corresponding to the location of the user from the weather server;
- identify the at least one skin care product based on the at least one skin characteristic, and at least one of the received indoor environmental data and/or the received outdoor environmental data; and
- transmit a recommendation comprising the identified at least one skin care product to the computing device.

10. A system according to the claim 9, wherein the processor is further configured to receive at least one of:
- an indoor time period spent by the user in an indoor environment of the accommodation associated with the user;
- an outdoor time period spent by the user in an outdoor environment at the location of the user,
and the processor is further optionally configured to compare the indoor time period and the outdoor time period; and receive at least one of the indoor environmental data and/or the outdoor environmental data based on the comparison between the indoor time period and the outdoor time period.

11. A system according to claim 9 or 10, wherein the automation device comprises:
- at least one sensor configured to detect at least one environmental value corresponding to at least one environmental variable associated with the accommodation; and
- at least one controller configured to automatically control at least one environment-modifier based on the at least one environmental value,
wherein the at least one environmental variable comprises at least one of temperature, humidity and air quality, and the at least one environment-modifier comprises at least one of an air conditioner, a heater, a cooler, a humidifier, a de-humidifier, an air-ionizer and a light source.

12. A system according to any of the claims 9 to 11, wherein the processor is configured to use an artificial intelligence algorithm for analysing the at least one image to determine the at least one skin characteristic of the user.

13. A system according to any of the claims 9 to 12, further comprising a product server communicably coupled with the processor, the processor being configured to:
- receive product information, brand information and relevant attributes of multiple skin care products from the product server; and
- filter the multiple skin care products to identify the at least one skin care product.

14. A system according to any of the claims 9 to 13, wherein the computing device is configured to communicate with the automation device through a wireless communication channel.

15. A system according to any of the claims 9 to 14, wherein the processor is arranged in the computing device, and the computing device optionally comprises a camera.
